# EUROPÄISCHE PATENTSCHRIFT

(11) **EP 2 552 617 B1**
(45) Veröffentlichungstag und Bekanntmachung des Hinweises auf die Patenterteilung: **09.09.2015**
(21) Anmeldenummer: 11719165.0
(22) Anmeldetag: 28.03.2011
(51) Int. Cl.: B21D 22/18

(54) **VERFAHREN ZUM UMFORMEN VON WENIGSTENS EINEM IM WESENTLICHEN EBENFLÄCHIGEN ROHLING ZU EINEM SCHALENKÖRPER UND DESSEN VERWENDUNG**
METHOD FOR SHAPING AT LEAST ONE ESSENTIALLY FLAT-SURFACED BLANK TO A SHELL BODY AND USE THEREOF
PROCÉDÉ POUR FORMER AU MOINS UNE ÉBAUCHE SENSIBLEMENT PLANE POUR DONNER UN CORPS EN CUVETTE, ET SON UTILISATION

(30) Priorität: 29.03.2010 DE 102010013207
(43) Veröffentlichungstag der Anmeldung: 06.02.2013
(73) Patentinhaber: MT Aerospace AG, 86153 Augsburg (DE)
(72) Erfinder: RADTKE, Wulf, 82152 Planegg (DE)
(74) Vertreter: Grape, Knut
(86) Internationale Anmeldenummer: PCT/EP2011/001548
(87) Internationale Veröffentlichungsnummer: WO 2011/124341

(56) Entgegenhaltungen:
- EP-A1- 1 157 762
- EP-A1- 1 728 567
- EP-A2- 0 457 358
- DE-B3- 10 317 880
- US-A- 3 316 745
- US-A- 4 644 626

## Beschreibung

Die vorliegende Erfindung betrifft ein Verfahren zum Umformen von wenigstens einem im Wesentlichen ebenflächigen Rohling aus Metall zu einem Schalenkörper und dessen Verwendung.

EP 0 457 358 zeigt ein Verfahren zum Umformen von wenigstens einem im Wesentlichen ebenflächigen Rohling zu einem Schalenkörper, umfassend folgende Schritte:
Einspannen des Rohlings an oder in einer Tragstruktur, in welcher der Rohling mit zunehmender Verformung zu dem Schalenkörper berührungslos aufgenommen wird, und
Verformen des Rohlings durch konkaves Drücken bzw. Spinformen und/oder Gegenrollen über wenigstens ein die Innenseite des kegelstumpfförmigen Rohlings beaufschlagendes Umformwerkzeug zu dem Schalenkörper.

Derartige Verfahren zur Herstellung von Schalenkörpern aus im Wesentlichen ebenflächigen Rohlingen, Ronden, Platten oder derartigen Blechtafeln sind allgemein bekannt.

Beim konvexen Drücken wird eine runde Platte, die im Pol bzw. Drehzentrum gegen eine rotierende, konvex geformte Drückform fixiert ist, mittels einer Umformrolle gegen die Drückform gedrückt und zu einem Schalenkörper umgeformt. Die Umformung erfolgt immer von der mittigen Einspannung aus. Mittels des konvexen Drückens, wie beispielhaft in der GB-A-1 468 659 oder der EP 1 285 707 B1 beschrieben ist, können im Allgemeinen nur verhältnismäßig dicke Ausgangsbleche zu Schalenkörpern umgeformt werden. Die für die Umformung erforderlichen Mindestwanddicken hängen, neben dem Durchmesser der herzustellenden Schalen, von der Querschnittsform des Schalenkörpers ab. Bei der Umformung von Schalenkörpern mit kleinem Wanddicken-Durchmesser-Verhältnis können sich im Blech Falten bilden. Um eine Faltenbildung, die zudem vom E-Modul des umzuformenden Werkstoffes bei der gewählten Umformtemperatur abhängt, und eine dadurch erforderliche mechanische Nachbearbeitung zu reduzieren, sind Vorrichtungen entsprechend der US-A-3 355 920 vorgeschlagen, die eine Kalibrierung der Form ermöglichen sollen.

Beim konkaven Gegenformdrücken wird eine vorgeformte runde Schale, die im Pol bzw. Drehzentrum gegen eine rotierende, konkav geformte Drückform fixiert ist, mittels einer Umformrolle gegen diese gedrückt und von der Innenseite rotationssymmetrisch umgeformt. Wie beispielhaft aus der US-A-6 006 569 hervorgeht, kann ein Schalenkörper in dem konkaven Drückfutter nicht abschließend auf Form und Maß gebracht werden. Vielmehr sind weitere Schritte, insbesondere eine zusätzliche Umformung auf einer konvex gekrümmten Drückform, erforderlich.

Beim Kugelstrahlumformen werden einzelne, elastisch vorgekrümmte Bauteile, durch Beschuss mit kleinen Kugeln, zu sphärisch gekrümmten Segmenten eines Schalenkörpers umgeformt und einschließlich Polkappe zu einem meist großen Schalenkörper verschweißt oder vernietet. Obgleich sich das Kugelstrahlumformen, wie zum Beispiel in der DE 38 42 064 C2 offenbart ist, in der Praxis durchaus bewährt hat, haben sich bei gewichtsoptimierten Schalenkörpern, wie zum Beispiel bei Domen von Tanks für die Luft- und Raumfahrt, die erforderlichen Wanddickenverstärkungen im Bereich von Schweißnähten und/oder Nietverbindungen als hinderlich herausgestellt.

Beim konkaven Drücken, das beispielhaft in der EP 0 457 358 B1, der US-A-3 316 745, der GB-A-201 269 oder der EP 1 728 567 B1 beschrieben ist, wird ein rotierender, ebenflächiger, kreisförmig zugeschnittener Rohling, zum Beispiel eine vorgeformte Ronde, entlang dessen Umfang auf einer Ring- oder Spannplatte befestigt, mit einer Rolle in einen freien Raum hinter der Ring- oder Spannplatte ausgewölbt und zu einem gegebenenfalls rotationssymmetrischen Schalenkörper mit endkonturgerechten Abmessungen umgeformt. Dies geschieht, je nach erforderlicher Durchwölbung, in meist mehreren Einzelschritten, wobei das Rondenmaterial plastisch gedehnt und azimutal infolge Flächenzunahme im Membranbereich gespannt wird. Dieses Verfahren und die dazugehörige Vorrichtung haben sich in der Praxis bereits ausgesprochen bewährt. In der Praxis haben sich allerdings die Herstellungskosten der Schalenkörper infolge hoher Wärme- und Energiekosten einerseits und hohen Personal-, Umrüst- und damit Zeit- sowie Kostenaufwandes andererseits als nicht unerheblich herausgestellt.

In der EP 1 157 762 A1 ist schließlich ein Verfahren zum Umformen eines im Wesentlichen ebenflächigen Rohlings aus Aluminium zu einem Schalenkörper beschrieben. Dabei wird ein kegelstumpfförmiger Rohling aus einem ebenflächigen Zuschnitt gebildet. Der kegelstumpfförmige Rohling wird an einer Tragstruktur mit einer Vakuumkammer eingespannt und mittels eines deformierbaren Druckkörpers sowie eines Druckbladders unter Temperatur- und Vakuumbeaufschlagung sowie anschließender Abkühlung zu einem Schalenkörper als Dom eines Tanks für ein Raumfahrzeug geformt. Dieses Verfahren weist erhebliche Nachteile auf. So ist eine ausreichende Verformbarkeit des kegelstumpfförmigen Rohlings durch ausschließlich Temperatur- und Vakuumbeaufschlagung ausgeschlossen, zumindest ausgesprochen eingeschränkt. Zum einen stehen bereits die Abmessungen, Größe und Wandstärke des kegelstumpfförmigen Rohlings einer konstruktiven Realisierung einer entsprechenden Vorrichtung zur Temperatur- und Vakuumbeaufschlagung entgegen. Zum anderen erhält der kegelstumpfförmige Rohling durch die Schweißnaht der Mantellinien und den am Umfang im Bereich der Oberseite gesondert angeschweißten Einspannring eine zusätzliche, ungewollte Steifigkeit. Besonders nachteilig wirkt sich bei diesem Verfahren jedoch die Temperatur- und Vakuumbeaufschlagung des Rohlings insgesamt aus. Das die Umformung bewirkende Vakuum unter gleichzeitigem Temperatureinfluss beaufschlagt den Rohling ständig und mit unverändert gleicher Kraft, ohne individuelle Form- und Abmessungsverhältnisse, Wanddickenunterschiede und damit einhergehende unterschiedliche Verformungsfähigkeiten, Materialfehler, wie Einschlüsse und Risse, und schwankende bzw. ungenügende Materialeigenschaften des Rohlings zu berücksichtigen. Eine unerwünschte lokale Verformung oder sogar ein lokales Versagen durch Überschreiten der Verformungsfähigkeit des Rohlings sind die Folge. Dieses Verfahren hat sich daher in der Praxis nicht bewährt.

Der vorliegenden Erfindung liegt daher die Aufgabe zugrunde, ein Verfahren zum Umformen von wenigstens einem im Wesentlichen ebenflächigen Rohling zu einem Schalenkörper zur Verfügung zu stellen, mit welchem sich die obigen Nachteile vermeiden lassen, welches ausgesprochen einfach, zeitsparend, energieeffizient und damit besonders kostengünstig ist, mithin eine weitaus verbesserte wirtschaftliche Nutzung insgesamt bei gleichzeitig hoher Maßhaltigkeit und Festigkeit des geformten Schalenkörpers ermöglicht, und dessen Verwendung bereitzustellen.

Diese Aufgabe wird auf überraschend einfache Weise durch die Merkmale des Anspruchs 1 gelöst.

Durch die Ausgestaltung des erfindungsgemäßen Verfahrens zum Umformen von wenigstens einem im Wesentlichen ebenflächigen bzw. nicht gekrümmten Rohling zu einem Schalenkörper, umfassend folgende Schritte:
a) Herausarbeiten von wenigstens einem ebenflächigen, als teilweiser Kreisring ausgebildeten Rohling aus dem wenigstens einen ebenflächigen Rohling,
b) Fügen eines kegelstumpfförmigen Rohlings bzw. Rohlings mit geradem Kegelstumpf bzw. Rohlings in Form eines geraden Kegelstumpfes aus dem wenigstens einen ebenflächigen, als teilweiser Kreisring ausgebildeten Rohling durch Schweißen entlang von einander zugewandten Mantellinien des wenigstens einen ebenflächigen, als teilweiser Kreisring ausgebildeten Rohlings,
c) Einspannen des kegelstumpfförmigen Rohlings an oder in einer Tragstruktur, in welcher der kegelstumpfförmige Rohling mit zunehmender Verformung zu dem Schalenkörper berührungslos aufgenommen wird, und
d) Verformen des kegelstumpfförmigen Rohlings durch konkaves Drücken bzw. Spinformen und/oder Gegenrollen über wenigstens ein die Innenseite des kegelstumpfförmigen Rohlings beaufschlagendes Umformwerkzeug zu dem Schalenkörper,
ist eine Verfahrensweise vorgeschlagen, welche durch eine verbesserte Ausnutzung vorhandener Wärme- und Kraftpotentiale zu einer erheblichen Reduzierung von Energiekosten und einer damit einhergehenden Zeitersparnis zu einer hohen Wirtschaftlichkeit führt. Bei dem erfindungsgemäßen Verfahren ist der kegelstumpfförmige Rohling dem Schalenkörper im Vergleich zu einem ebenflächigen kreisförmigen bzw. scheibenförmigen Rohling bereits deutlich angenähert. Auf diese Weise können der erforderliche Umformgrad im Vergleich zum Umformen eines ebenflächigen kreisförmigen Rohlings erheblich vermindert und somit Beschränkungen des Umformens, wie etwa Werkstoff-Versagen im Grundwerkstoff und im besonders versagenskritischen Schweißbereich, oder Faltenbildung, vermieden oder zumindest wesentlich vermindert werden. Dies wiederum ermöglicht die Herstellung von Schalenkörpern mit weitaus größerem Verhältnis aus axialer Länge und Durchmesser als bisher. Ein zusätzlicher Vorteil besteht darin, dass die Schalenkörper im Verhältnis zu ihrem Durchmesser dünnwandiger und mithin unter geringerem Werkstoffeinsatz sowie leichter ausgeführt werden können als dies bisher aufgrund einer Faltenbildung möglich war. Darüber hinaus lässt sich durch das erfindungsgemäße Verfahren auf einzelne oder sogar mehrere Fertigungsschritte, die bisher beim Umformen eines ebenflächigen kreisförmigen Rohlings erforderlich waren, verzichten. So können bis zu 95 % der Fertigungsschritte beim bisherigen Umformen in Wegfall kommen. Damit lassen sich Vorteile einer erheblichen Reduzierung von Fertigungskosten, eines höheren Bauteil-Durchsatzes und einer verbesserten Wirtschaftlichkeit insgesamt erreichen. Gleichzeitig lassen sich eine ausgesprochen große Form- und Maßgenauigkeit und zugleich hohe Festigkeit des hergestellten Schalenkörpers erhalten.

Weitere vorteilhafte Einzelheiten dies erfindungsgemäßen Verfahrens sind in den Ansprüchen 2 bis 11 beschrieben.

Die Merkmale des Anspruchs 2, wonach der wenigstens eine ebenflächige, als teilweiser Kreisring ausgebildete Rohling aus dem wenigstens einen ebenflächigen Rohling durch Trennen, insbesondere durch mechanisches Schneiden, Schneiden mittels Laser oder Wasserstrahl, Sägen, Fräsen oder Erodieren, herausgearbeitet wird, dienen einer einfachen, genauen und kostengünstigen Bauweise.

Von ganz besonders großem Interesse sind weiterhin die konstruktiven Maßnahmen des Anspruchs 3, wonach der kegelstumpfförmige Rohling aus dem wenigstens einen ebenflächigen, als teilweiser Kreisring ausgebildeten Rohling durch Rührreibschweißen (Friction-Stir-Welding bzw. FSW) entlang von einander zugewandten Mantellinien des wenigstens einen ebenflächigen, als teilweiser Kreisring ausgebildeten Rohlings gefügt wird. Durch das Rührreibschweißen ergeben sich erhebliche Vorteile gegenüber üblichen Schweißverfahren, vor allem dann, wenn die Schweißnaht/Schweißnähte anschließend hohen Spannungen aufgrund einer weitergehenden Umformung, wie einem konkavem Drücken bzw. Spinformen und/oder Gegenrollen und/oder Hämmern und/oder Kugelstrahlen, unterworfen sind. So ist das Rührreibschweißen besonders vorteilhaft aufgrund der grundsätzlichen Möglichkeit zum Arbeiten unterhalb des Schmelzpunktes, einem geringen Verzug in der Schweißnaht/den Schweißnähten, hervorragenden mechanischen Eigenschaften der Schweißnaht/Schweißnähte, keiner Bildung von Lunkern, Poren und Schweißspritzern, einer allenfalls sehr geringen Schrumpfung und einer günstigen Reparaturmöglichkeit.

Vorzugsweise wird der kegelstumpfförmige Rohling an oder in die Tragstruktur, in welcher der kegelstumpfförmige Rohling mit zunehmender Verformung zu dem Schalenkörper berührungslos aufgenommen wird, nach Anspruch 4 über einen Umfang im Bereich einer großen Öffnung des kegelstumpfförmigen Rohlings durch eine Einrichtung zum Einspannen des kegelstumpfförmigen Rohlings mit einem Drückring und einem Spannring, sowie insbesondere einem Dichtring zwischen Drückring und Spannring, eingespannt und fixiert.

Der kegelstumpfförmige Rohling wird durch konkaves Drücken bzw. Spinformen zu dem Schalenkörper verformt. Das konkave Drücken hat den Vorteil, das sich das Umformen bei jedem einzelnen Überrollvorgang lokalisiert mitwandernd, mithin zeitlich eng begrenzt und in der radialen Verformung im durch die jeweilige Schablone aufgeprägten Verformungsgrad definiert abspielt. Alternativ oder kumulativ dazu kann die Verformung erfindungsgemäß auch durch Gegenrollen erfolgen.

Bei kegelstumpfförmigen Rohlingen von größerer Wanddicke oder mit komplizierter Meridiangeometrie ist es von besonderem Vorteil, dass der kegelstumpfförmige Rohling über wenigstens ein die Innenseite des kegelstumpfförmigen Rohlings beaufschlagendes Umformwerkzeug zu dem Schalenkörper entsprechend dem Prinzip des "konkaven Drückens" verformt wird. Als Umformwerkzeug kann dabei wenigstens eine Umform- oder Drückrolle und/oder eine Drückkugel, die dann vorzugsweise hydrostatisch gelagert ist, Verwendung finden. Als Umformwerkzeug kann alternativ dazu auch wenigstens eine damit zusammenwirkende die Außenseite des kegelstumpfförmigen Rohlings beaufschlagende Gegenrolle.

Auf die Maßhaltigkeit des kegelstumpfförmigen Rohlings und späteren Schalenkörpers während des Verformens bzw. Umformens oder konkaven Drückens kann dadurch Einfluss genommen werden, dass das die Innenseite des kegelstumpfförmigen Rohlings beaufschlagende Umformwerkzeug in einer Ebene radial zum kegelstumpfförmigen Rohling zweidimensional an dem kegelstumpfförmigen Rohling vom Umfang im Bereich einer kleinen Öffnung zum Umfang im Bereich einer großen Öffnung des Rohlings, und umgekehrt, geführt wird. Durch eine solche gegebenenfalls wahlweise wechselnde Führung lassen sich deutlich verkürzte Verfahrwege des Umformwerkzeuges erreichen. Die Folge nicht zuletzt hieraus resultierend ist eine Zeitersparnis insgesamt. Grundsätzlich kann also die räumliche Bewegung des wenigstens einen Umformwerkzeuges relativ zum Rohling in Form einer räumlichen Spirale auf der Oberfläche bzw. Innenseite des kegelstumpfförmigen Rohlings von innen nach außen oder umgekehrt von außen nach innen verlaufen, die zur gewünschten Geometrie des Schalenkörpers führt. Die Spiralform ergibt sich durch Überlagerung der radialen zweidimensionalen Bewegung mit der Rotation des kegelstumpfförmigen Rohlings als dritter Dimension. Eine Relativbewegung zwischen Rohling und Umformwerkzeug kann aber auch schrittweise mit jeweils angepasster Anstellung und in beliebigen Kombinationen der jeweiligen Grundbewegungen erfolgen, um eine gewünschte Geometrie zu erzeugen.

Zur weitergehenden Erhöhung der mit dem erfindungsgemäßen Verfahren erreichbaren Maßhaltigkeit wird das die Innenseite des kegelstumpfförmigen Rohlings beaufschlagende Umformwerkzeug numerisch geregelt und/oder gesteuert. Die Endgeometrie des Schalenkörpers lässt sich dabei durch die Meridiankurve einer (Blech-) Schablone bzw. durch Einprogrammierung der Meridiankurve der (Blech-)Schablone in eine NC-Steuerung definieren. Nachträgliche Geometrieänderungen oder Geometrieanpassungen für anders geformte Schalenkörper sind ohne hohen Zeit-, Personal- und damit einhergehend Kostenaufwand möglich, nachdem lediglich die Schablone bzw. die NC-Steuerung für das Umformwerkzeug verändert werden muss.

Zweckmäßigerweise werden der kegelstumpfförmige Rohling und das wenigstens eine Umformwerkzeug bei der Verformung zu dem Schalenkörper nach Anspruch 5 relativ zueinander bewegt, insbesondere gedreht. Dies kann durch die Bewegung des Umformwerkzeuges und/oder eine zu der Bewegung des Umformwerkzeuges vorgesehene zusätzliche Relativbewegung bzw. Relativdrehung von zu verformendem Rohling und beulstabiler Beilage bzw. der Tragstruktur oder Kammer der Tragstruktur selbst erfolgen.

Weiterhin liegt es im Rahmen der Erfindung, den kegelstumpfförmigen Rohling nach Anspruch 6 vor dem Verformen mit mindestens einer an Form und Abmessung des kegelstumpfförmigen Rohlings angepassten, beulstabilen Beilage oder dergleichen Unterlage und/oder Auflage zu stützen. Der dünne kegelstumpfförmige Rohling wird mittels einer oder zweier derartiger beulstabiler Beilagen am Beulen gehindert. Die beulstabile/n Beilage/n ist/sind insoweit verformbar, wenn auch insbesondere begrenzt verformbar. Die Beulstabilität dieser Beilagen kann sowohl durch deren Dicke als auch durch geeignete Wahl des Werkstoffes, d.h. durch die Wahl eines Werkstoffes mit möglichst hohem E-Modul, sichergestellt werden.

In weiterer Ausgestaltung des erfindungsgemäßen Verfahrens kann der kegelstumpfförmige Rohling nach Anspruch 7 über wenigstens eine der Tragstruktur zugeordnete Einrichtung zur Erwärmung und/oder Aufheizung des kegelstumpfförmigen Rohlings auf ein erhöhtes Temperaturprofil gebracht werden.

In diesem Zusammenhang ist es von besonderer Bedeutung, dass der Rohling nach Anspruch 8 vor dem Verformen zu dem Schalenkörper weichgeglüht wird. Das Verformen bzw. Umformen oder konkave Drücken lässt sich umso einfacher und sicherer durchführen, je weicher und duktiler sich das Material verhält. Das Weichglühen ist zum Abbau innerer Spannungen und schweißbedingter Unterschiede in der Formänderungsfestigkeit von Vorteil.

Darüber hinaus ist der Erhalt einer gewünschten Endwanddicke des Schalenkörpers von besonderem Interesse. Demnach wird der ebenflächige Rohling oder der ebenflächige, als teilweiser Kreisring ausgebildete Rohling oder der kegelstumpfförmige Rohling vor dem Verformen zu dem Schalenkörper durch Spanabhebung, insbesondere durch Drehen, Fräsen und/oder Schleifen, vorkonturiert, also mit einer vorbestimmten Wanddickenverteilung im ebenflächigen Zustand versehen, und/oder mit Durchbrüchen, Perforationen oder dergleichen Ausnehmungen, welche zum Verformen durch Abdeckungen, insbesondere eine Folie, zeitweise verschlossen werden, ausgestattet. Durch Vorkonturieren der Ausgangsdicke vor dem Verformen lässt sich die Endwanddicke des Schalenkörpers exakt einstellen. Von besonderem Vorteil hat sich in der Praxis erwiesen, die Konturierung des Rohlings zweckmäßigerweise auf dessen Außenseite zu versehen. Hierdurch ist sichergestellt, dass das Umformwerkzeug mit der unkonturierten, glatten Innenseite des kegelstumpfförmigen Rohlings in Berührung bzw. Kontakt kommt, sofern ein solches Umformwerkzeug überhaupt erforderlich ist.

Weiterhin kann es von besonderem Vorteil sein, das erfindungsgemäße Verfahren zum Verformen bzw. Umformen oder Drücken durch Einsatz von Vakuum zu unterstützen. Demnach wird die der Tragstruktur zugewandte Außenseite des kegelstumpfförmigen Rohlings gegenüber der der Tragstruktur abgewandten Innenseite des Rohlings abgedichtet und wird ein Vakuum an eine von dem kegelstumpfförmigen Rohling abgeschlossene Kammer der Tragstruktur angelegt. Die Verformung des kegelstumpfförmigen Rohlings wird somit durch definiertes Evakuieren der Vakuumkammer unterstützt. Sofern das Verformen des kegelstumpfförmigen Rohlings durch Anlegen eines Vakuums zusätzlich unterstützt werden soll, lassen sich die zuvor erwähnten Durchbrüche, Perforationen oder dergleichen Ausnehmungen des kegelstumpfförmigen Rohlings durch die Abdeckungen, insbesondere eine Folie, zeitweise vakuumdicht versiegeln.

Zur Erhöhung der erreichbaren Maßhaltigkeit ist erfindungsgemäß weiterhin vorgesehen, den kegelstumpfförmigen Rohling beim Verformen zu dem Schalenkörper kontinuierlich zu vermessen. Eine solche geometrische Vermessung des Rohlings kann beispielsweise automatisch mittels eines, gegebenenfalls berührungslosen und einschwenkenden, Messsystems durchgeführt werden. Die geometrische Vermessung ist besonders vorteilhaft, um daraus Daten für eine Anpassung der Parameter einer parallel einhergehenden und/oder nachfolgenden Umformung zu gewinnen.

Entsprechend den Maßnahmen nach Anspruch 9 wird der kegelstumpfförmige Rohling in vorteilhafter Weise einem Lösungsglühen und anschließendem Abschrecken, sowie bei Bedarf gegebenenfalls einem nachfolgenden Kaltrecken, unterzogen.

Des Weiteren wird der Schalenkörper entsprechend den Merkmalen nach Anspruch 10 nach dem Verformen bzw. Umformen oder dem konkaven Drücken in der Tragstruktur oder im Ofen warmausgelagert und auf einen Zustand T8 gebracht. Gerade wenn der Schalenkörper aus Metall, insbesondere aus Aluminium oder einer Aluminiumlegierung besteht, wird in aller Regel eine optimale Vergütung angestrebt, um einen Zustand T8 in den Materialeigenschaften zu erreichen. So ist der Zustand T8 der zur Zeit maximal erreichbare Zustand bei aushärtbaren Aluminiumlegierungen, die häufig für Treibstofftanks von Raketen zur Anwendung kommen.

Zweckmäßigerweise ist der ebenflächige Rohling oder der kegelstumpfförmige Rohling nach Anspruch 11 aus Metall, insbesondere Stahl, Edelstahl, Aluminium, Titan, einer Legierung daraus und/oder einer Kombination daraus, bevorzugt hoch- und höchstfesten Aluminium-Legierungen und Lithium-haltigen Aluminium-Legierungen, und ganz bevorzugt einer, gegebenenfalls aushärtbaren, Aluminiumlegierung, wie etwa AL 2195 oder AL 2219, und/oder aus Kunststoff und/oder aus Keramik und/oder aus einer Kombination daraus gebildet.

Schließlich liegt es noch im Rahmen der Erfindung, das erfindungsgemäße Verfahren nach Anspruch 12 zum Herstellen von rotationssymmetrischen und/oder nicht rotationssymmetrischen schalenförmigen Bauteilen zu verwenden. Dabei haben sich halbkugelförmige, kugelkappenförmige, kalottenförmige, ellipsoidkalottenförmige, konische oder elliptische Bauteile bzw. Bauteile in Cassini-Form, Halb-Torus-förmig oder mit anderen dergleichen Querschnittsformen ausgestaltete Bauteile als besonders vorteilhaft erwiesen.

Ganz besonders eignet sich das erfindungsgemäße Verfahren nach Anspruch 13 bei der Herstellung von Schalen als Dome für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

Weitere Merkmale, Vorteile und Einzelheiten der Erfindung ergeben sich aus der nachfolgenden Beschreibung bevorzugter Ausführungsformen der Erfindung sowie anhand der zeichnungen.

Hierbei zeigen:
- Fig. 1: eine Draufsicht auf eine Ausführungsform eines erfindungsgemäßen ebenflächigen, als teilweiser Kreisring ausgebildeten Rohlings bzw. eine Kegelstumpf-Abwicklung eines erfindungsgemäßen Rohlings,
- Fig. 2: eine perspektivische Ansicht einer Ausführungsform eines erfindungsgemäßen kegelstumpfförmigen Rohlings, der durch Schweißen entlang von einander zugewandten Mantellinien des als teilweiser Kreisring ausgebildeten Rohlings entsprechend der Fig. 1 gefügt ist,
- Fig. 3: eine schematische Querschnittansicht durch eine Ausführungsform eines erfindungsgemäßen kegelstumpfförmigen Rohlings entsprechend der Fig. 2, der in eine Tragstruktur eingespannt und mittels einer bevorzugten Ausführungsform eines erfindungsgemäßen Verfahrens über wenigstens ein Umformwerkzeug zu einem Schalenkörper umgeformt wird,
- Fig. 4.: eine schematische Querschnittansicht durch eine Ausführungsform eines erfindungsgemäßen Schalenkörpers, der aus dem kegelstumpfförmigen Rohling entsprechend den Fig. 3 geformt ist,
- Fig. 5: eine schematische Querschnittansicht durch eine weitere Ausführungsform eines erfindungsgemäßen kegelstumpfförmigen Rohlings entsprechend der Fig. 3, der in eine Tragstruktur eingespannt, mit mindestens einer in Form und Abmessung des kegelstumpfförmigen Rohlings angepassten, beulstabilen Beilage gestützt und mittels der bevorzugten Ausführungsform des erfindungsgemäßen Verfahrens über wenigstens ein Umformwerkzeug zu einem Schalenkörper umgeformt wird,
- Fig. 6: eine schematische Querschnittansicht durch eine andere Ausführungsform eines erfindungsgemäßen kegelstumpfförmigen Rohlings, in verkleinerter Darstellung, und
- Fig. 7: eine Draufsicht auf eine andere Ausführungsform eines erfindungsgemäßen ebenflächigen, als teilweiser Kreisring ausgebildeten Rohlings bzw. eine Kegelstumpf-Abwicklung eines erfindungsgemäßen Rohlings entsprechend der Fig. 1.

Bei der nachfolgenden Beschreibung von verschiedenen Ausführungsbeispielen des erfindungsgemäßen Verfahrens sind einander entsprechende, gleiche Bauteile jeweils mit identischen Bezugsziffern versehen.

Das Verfahren nach der Erfindung ist zum Umformen bzw. Verformen von wenigstens einem im Wesentlichen ebenflächigen bzw. nicht-gekrümmten Rohling 10 aus Metall, insbesondere Stahl, Edelstahl, Aluminium, Titan, einer Legierung daraus und/oder einer Kombination daraus, bevorzugt hoch- und höchstfesten Aluminium-Legierungen und Lithium-haltigen Aluminium-Legierungen, und ganz bevorzugt einer, vorzugsweise aushärtbaren, Aluminiumlegierung, wie zum Beispiel Al 2195 oder Al 2219, und/oder aus Kunststoff und/oder aus Keramik und/oder aus einer Kombination daraus zu einem Schalenkörper, schalenförmigen Bauteil oder dergleichen Formteil vorgesehen, und zwar gleichermaßen im kalten wie im warmen Zustand.

Das Verfahren nach der Erfindung eignet sich insbesondere zur Herstellung von rotationssymmetrischen und/oder nicht rotationssymmetrischen schalenförmigen Bauteilen. In ausgesprochen vorteilhafter Weise dient das Verfahren nach der Erfindung der Herstellung von halbkugelförmig, kugelkappenförmig, kalottenförmig, ellipsoidkallotenförmig, konisch, elliptisch, in Cassini-Form, Halb-Torus-förmig oder mit anderen Querschnittsformen ausgestalteten Bauteilen.

In ganz vorteilhafter Weise eignet sich das Verfahren nach der Erfindung zur Herstellung von Schalen als Dome für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

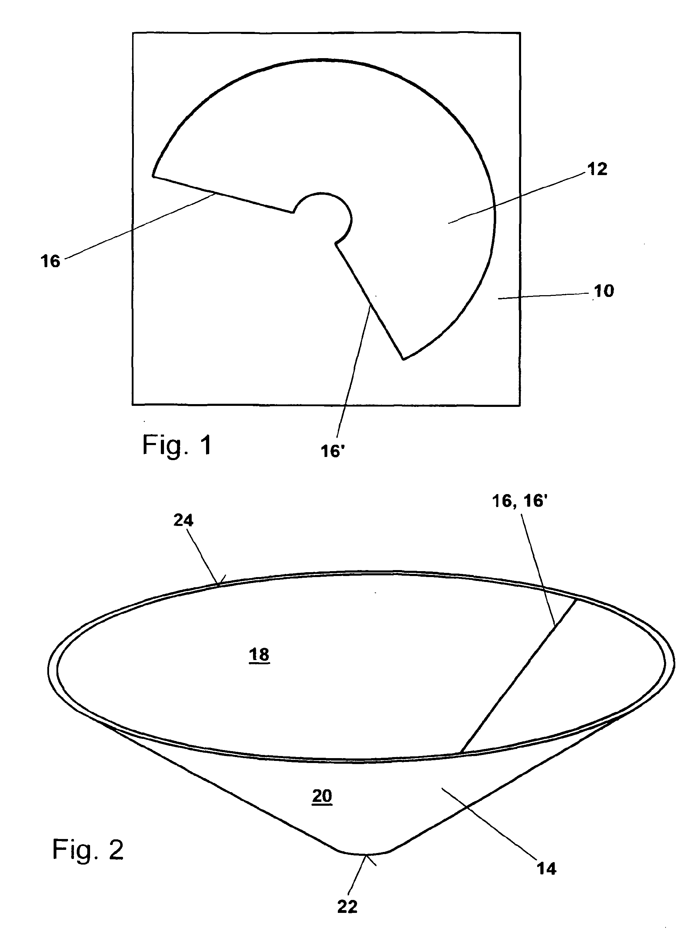

Entsprechend der Fig. 1 umfasst das erfindungsgemäße Verfahren einen ersten Schritt, bei dem wenigstens ein Rohling 12, der ebenflächig ist und als teilweiser Kreisring bzw. als Kegelstumpf-Abwicklung ausgebildet ist, aus dem wenigstens einen ebenflächigen Rohling 10, welcher in Form einer Platte oder eines Bleches ausgebildet ist, herausgearbeitet wird. Die Herausarbeitung erfolgt dabei vorzugsweise durch Trennen, insbesondere durch mechanisches Schneiden, Schneiden mittels Laser oder Wasserstrahl, Sägen, Fräsen oder Erodieren etc.

Wie in der Fig. 2 schematisch angedeutet ist, wird der wenigstens eine ebenflächige, als teilweiser Kreisring ausgebildete Rohling 12 in einem zweiten Schritt des erfindungsgemäßen Verfahrens zu einem kegelstumpfförmigen Rohling 14 bzw. Rohling 14 mit geradem Kegelstumpf bzw. Rohling 14 in Form eines geraden Kegelstumpfes gefügt. Dabei wird der Rohling 12 entlang seiner einander zugewandten Mantellinien 16, 16' geschweißt bzw. verschweißt. Beim erfindungsgemäßen Verfahren wird als ganz bevorzugtes Schweißverfahren das Rührreibschweißen (Friction-Stir-Welding bzw. FSW) angewendet.

Der kegelstumpfförmige Rohling 14 weist eine Innenseite 18 und eine Außenseite 20 auf und besitzt weiterhin eine kleine Öffnung 22 und eine große Öffnung 24. Die kleine Öffnung 22 bildet den sogenannten Pol, während die große Öffnung 24 einen Außenumfang darstellt. Die kleine Öffnung 22 kann gegebenenfalls durch eine einzuschweißende (Pol-)Kappe beliebiger Form, d.h. in Form einer ebenen Scheibe und einer mehrfach gekrümmten Gestalt (zum Beispiel Halbkugel, Kugelabschnitt, gedrücktes/gestrecktes Ellipsoid etc.) verschlossen werden, um die auf den kegelstumpfförmigen Rohling 14 auszuübende Kraft auf einen größeren Umfang zu verteilen und damit die Umformung zu erleichtern. Die große Öffnung 24 kann durch einen angeformten Flansch oder Bord so gestaltet werden, dass die Einspannung zum Umformen erleichtert bzw. geometrisch reproduzierbar definiert wird.

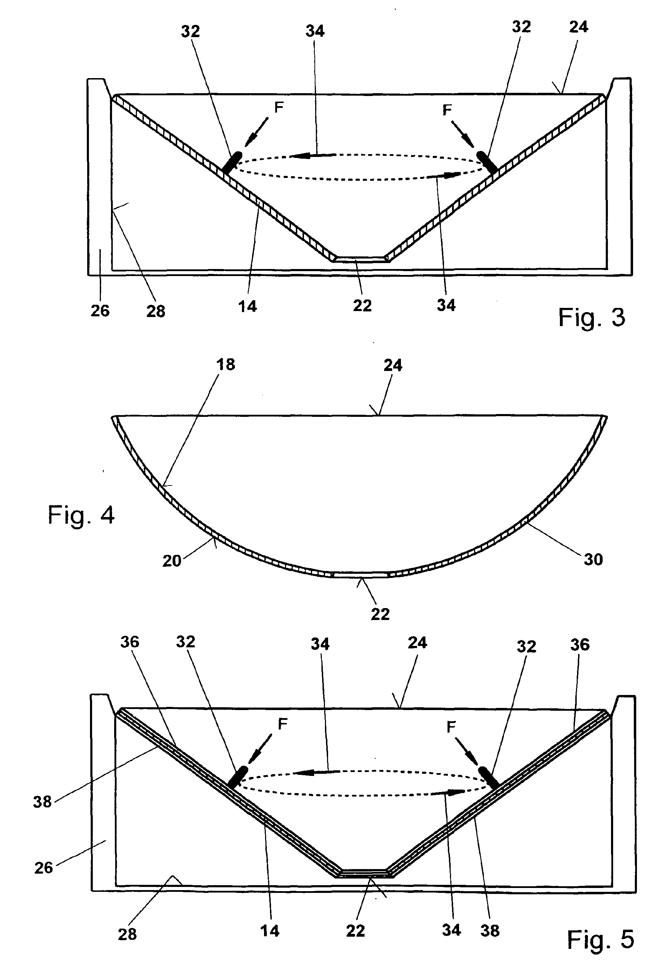

In der Fig. 3 ist gezeigt, dass der kegelstumpfförmige Rohling 14 anschließend in einem dritten Schritt des erfindungsgemäßen Verfahrens in eine Tragstruktur 26 eingesetzt wird. Die Tragstruktur 26 kann dabei als offenes Gestell oder Raumfachwerk ausgebildet sein. Bei dem schematisch dargestellten Ausführungsbeispiel kommt der kegelstumpfförmige Rohling 14 ausschließlich über einen Umfang im Bereich der großen Öffnung 24 mit einer Einrichtung zum Einspannen (nicht dargestellt) in Kontakt. Der kegelstumpfförmige Rohling 14 wird beispielsweise durch die Einrichtung zum Einspannen über einen Drückring und einen Spannring, sowie gegebenenfalls einen Dichtring zwischen Drückring und Spannring (jeweils nicht dargestellt), eingespannt, gehalten und während des Umformens dauerhaft sowie zuverlässig fixiert.

Einmal von der Einspannung des kegelstumpfförmigen Rohlings 14 am Umfang im Bereich der großen Öffnung 24 abgesehen, berührt der kegelstumpfförmige Rohling 14 die Tragstruktur 26 zwischen dem Umfang im Bereich der großen Öffnung 24 und dem Umfang im Bereich der kleinen Öffnung 22 nicht. Auf diese Weise wird jede zusätzliche Zwangsbedingung außerhalb der Einspannung an der großen Öffnung 24 vermieden.

Bei der in der Fig. 3 gezeigten Ausführungsform umfasst die Tragstruktur 26 eine Kammer 28, die nachfolgend noch näher erläutert wird. Die Kammer 28 ist im Wesentlichen becher-, topf-, schüssel-, kegel-, kegelstumpf- oder dergleichen -hohlförmig ausgebildet. Die Form der Kammer 28 der Tragstruktur 26 weicht, wie der Fig. 3 deutlich entnehmbar ist, von der Form und Abmessung des zu verformenden Rohlings 14 ersichtlich ab.

Um jede zusätzliche Zwangsbedingung auch während des Umformens auszuschließen, wird der kegelstumpfförmige Rohling 14 in der Tragstruktur 26 und/oder der Kammer 28 gleichermaßen erfindungsgemäß mit zunehmender Verformung berührungslos aufgenommen. Mit anderen Worten kommt der kegelstumpfförmige Rohling 14 in der Tragstruktur 26 und/oder der Kammer 28 ausschließlich randseitig bzw. umfangsseitig im Bereich der großen Öffnung 24 mit der Einrichtung zum Einspannen (nicht dargestellt) in Kontakt. Der/die von der Einrichtung zum Einspannen nicht beaufschlagten Bereich/e des Rohlings 14, welche/r (zunehmend) verformt werden soll/en, kommt/kommen mit der Tragstruktur 26 und/oder die Kammer 28 nicht in Kontakt.

Wie ebenfalls in der Fig. 3 dargestellt ist, schließt sich sodann der vierte Schritt des erfindungsgemäßen Verfahrens an. Dabei wird der kegelstumpfförmige Rohling 14 zu einem Schalenkörper 30 entsprechend der Fig. 4 über wenigstens ein Umformwerkzeug 32, welches die Innenseite 18 des kegelstumpfförmigen Rohlings 14 beaufschlagt, verformt.

Eine ganz bevorzugte Verformung erfolgt bei dem erfindungsgemäßen Verfahren mittels konkaven Drückens bzw. Spinformens des kegelstumpfförmigen Rohlings 14. In diesem Zusammenhang wird der kegelstumpfförmige Rohling 14 über wenigstens ein die Innenseite 18 beaufschlagendes Umformwerkzeug 32 in Form einer Umform- oder Drückrolle verformt. Bei der Ausführungsform der Fig. 3 kommen zwei solcher Umform- oder Drückrollen zum Einsatz. Alternativ oder kumulativ ist es auch möglich, wenigstens eine, vorzugsweise hydrostatisch gelagerte, Drückkugel zu verwenden.

In alternativer Ausgestaltung zu dem erfindungsgemäßen Verfahren mittels konkaven Drückens ist es ebenso möglich, den kegelstumpfförmigen Rohling 14 durch Gegenrollen zu dem Schalenkörper 30 zu verformen. In diesem Fall ist das wenigstens eine Umformwerkzeug 32 entweder durch wenigstens eine damit zusammenwirkende die Außenseite 20 des kegelstumpfförmigen Rohlings 14 beaufschlagende Gegenrolle (nicht dargestellt) ausgebildet.

In zweckmäßiger Weise wird das Umformwerkzeug 32, welches die Innenseite 18 des kegelstumpfförmigen Rohlings 14 beaufschlagt, in einer Ebene radial zum kegelstumpfförmigen Rohling 14 zweidimensional an dem kegelstumpfförmigen Rohling 14 vom Umfang im Bereich der kleinen Öffnung 22 zum Umfang im Bereich der großen Öffnung 24 des Rohlings 14 geführt, und umgekehrt. Das Umformwerkzeug 32 wird mittels einer Schablone oder numerisch geregelt und/oder gesteuert.

Es ist darüber hinaus denkbar, ohne im Einzelnen dargestellt zu sein, das erfindungsgemäße Verfahren dahingehend weiter zu verbessern, dass der kegelstumpfförmige Rohling 14 und das wenigstens eine Umformwerkzeug 32 bei der Verformung zu dem Schalenkörper 30 relativ zueinander bewegt, insbesondere gedreht, werden. In der Fig. 3 ist durch die Pfeile 34 schematisch angedeutet, dass der kegelstumpfförmige Rohling 14 in der Tragstruktur 26 feststehend angeordnet ist, während sich das Umformwerkzeug 32 bewegt bzw. dreht. Ohne im Einzelnen dargestellt zu sein, kann eine kinematische Umkehr dessen ebenso vorteilhaft sein, d.h. dass der kegelstumpfförmige Rohling 14 in oder zusammen mit der Tragstruktur 26 drehbar ausgebildet ist, während das Umformwerkzeug 32 lediglich in radialer Richtung beweglich ist. Schließlich ist auch eine Kombination dessen möglich, so dass sowohl der kegelstumpfförmige Rohling 14 in oder mit der Tragstruktur 26 als auch das Umformwerkzeug 32 relativ drehbar ausgestaltet sind.

Gemäß der Fig. 5 wird der kegelstumpfförmige Rohling 14 in vorteilhafter Weise vor dem Verformen mit mindestens einer beulstabilen Beilage 36, 38 oder dergleichen Unterlage und/oder Auflage gestützt. Die mindestens eine beulstabile Beilage 36 bzw. 38 oder dergleichen Unterlage und/oder Auflage ist insoweit verformbar, wenn auch insbesondere begrenzt verformbar, um eine Faltenbildung des zu verformenden Rohlings 14 am Beulen zu hindern bzw. den zu verformenden Rohling 10 derart zu stabilisieren, dass die Gefahr der Faltenbildung vermieden wird. Bei dem dargestellten Ausführungsbeispiel der Fig. 5 wirkt die Beilage 36 quasi als Auflage und wirkt die Beilage 38 quasi als Unterlage, jeweils von dem Umformwerkzeug 32 aus betrachtet. Die Beilagen 36, 38 sind an Form und Abmessung des kegelstumpfförmigen Rohlings 14 angepasst. So stimmen der kegelstumpfförmige Rohling 14 und die Beilagen 36, 38 in deren Form im Wesentlichen überein. Um aufgrund der geraden Kegelstumpfform während des gesamten Verformens des kegelstumpfförmigen Rohlings 14 zu dem Schalenkörper 30 eine gegenseitige vollflächige Anlage der Beilagen 36, 38 an der Innenseite 18 bzw. Außenseite 20 des kegelstumpfförmigen Rohlings 14 zu erreichen, ist allerdings die als Auflage vorgesehene Beilage 36 in der Abmessung etwas kleiner als der kegelstumpfförmige Rohling 14. Bei der als Unterlage vorgesehenen Beilage 38 verhält es sich umgekehrt. Insoweit ist die als Unterlage vorgesehene Beilage 38 in der Abmessung etwas größer als der kegelstumpfförmige Rohling 14. Durch die mindestens eine, hier zwei, beulstabile/n Beilage/n 36, 38 ist ein Beulen des kegelstumpfförmigen Rohlings 14 ausgeschlossen, zumindest erheblich erschwert. Die Beulstabilität der Beilagen 36, 38 kann sowohl durch deren Dicke als auch durch geeignete Wahl des Werkstoffes, d.h. durch die Wahl eines Werkstoffes mit möglichst hohem E-Modul, erreicht werden.

Der kegelstumpfförmige Rohling 14 wird vorzugsweise über wenigstens eine der Tragstruktur 26 zugeordnete Einrichtung zur Erwärmung und/oder Aufheizung (nicht gezeigt) des kegelstumpfförmigen Rohlings 14 auf ein erhöhtes Temperaturprofil gebracht. Vor dem Verformen zu dem Schalenkörper 30 kann der kegelstumpfförmige Rohling 14 beispielsweise weichgeglüht werden. Des Weiteren kann der kegelstumpfförmige Rohling 14, insbesondere nach weitgehendem Verformen zu dem Schalenkörper 30, einem Lösungsglühen und anschließendem Abschrecken sowie bei Bedarf gegebenenfalls einem nachfolgenden Kaltrecken unterzogen werden. Durch letztere Maßnahmen lassen sich potentielle Verzüge auszugleichen, Eigenspannungen beseitigen und Gitterstörungen im Gefüge möglichst homogen verteilen.

Der ebenflächige Rohling 10 oder der ebenflächige, als teilweiser Kreisring ausgebildete Rohling 12 oder der kegelstumpfförmige Rohling 14 kann außerdem vor dem Verformen zu dem Schalenkörper 30 durch Spanabhebung, insbesondere durch Drehen, Fräsen und/oder Schleifen, mit einer Konturierung versehen werden, wobei eine vorbestimmte Wanddickenverteilung des Rohlings 10, 12, 14 zum Erhalt einer gewünschten Endwanddicke des Schalenkörpers 30 eingestellt wird. Gleichermaßen ist es möglich, Durchbrüche, Perforationen oder dergleichen Ausnehmungen vorzusehen, welche zum Verformen durch Abdeckungen, insbesondere eine Folie, zeitweise verschlossen werden können (jeweils nicht gezeigt).

Um das Verformen des kegelstumpfförmigen Rohlings 14 durch das wenigstens eine Umformwerkzeug 32 zu unterstützen, kann zusätzlich ein definiertes Evakuieren vorgesehen sein. Dabei werden die der Tragstruktur 26 zugewandte Außenseite 20 des kegelstumpfförmigen Rohlings 14 gegenüber der Innenseite 18 des kegelstumpfförmigen Rohlings 14, welche der Tragstruktur 26 abgewandt ist, abgedichtet und wird ein Vakuum an eine von dem kegelstumpfförmigen Rohling 14 abgeschlossene Kammer 28 der Tragstruktur 26 angelegt. Zu diesem Zweck kann die Tragstruktur 26 beispielsweise als Raumfachwerk mit vakuumfester Wandung oder die Kammer 28 als eine Vakuumkammer ausgebildet sein. Durchbrüche, Perforationen oder dergleichen Ausnehmungen an dem ebenflächigen Rohling 10 bzw. dem flächigen, als gerader Kreiskegel ausgebildeten Rohling 12 bzw. dem kegelstumpfförmigen Rohling 14 lassen sich durch gesonderte Abdeckungen, insbesondere eine Folie, wie auch in ganz vorteilhafter Weise durch die beulstabile/n Beilage/n 36, 38 beim Verformen zeitweise vakuumdicht versiegeln.

Während des Verformens zu dem Schalenkörper 30 wird der kegelstumpfförmige Rohling 14 vorzugsweise kontinuierlich vermessen.

Schließlich kann der Schalenkörper 30 nach dem Verformen in der Tragstruktur 26 oder im Ofen warmausgelagert und auf einen Zustand T8 gebracht werden.

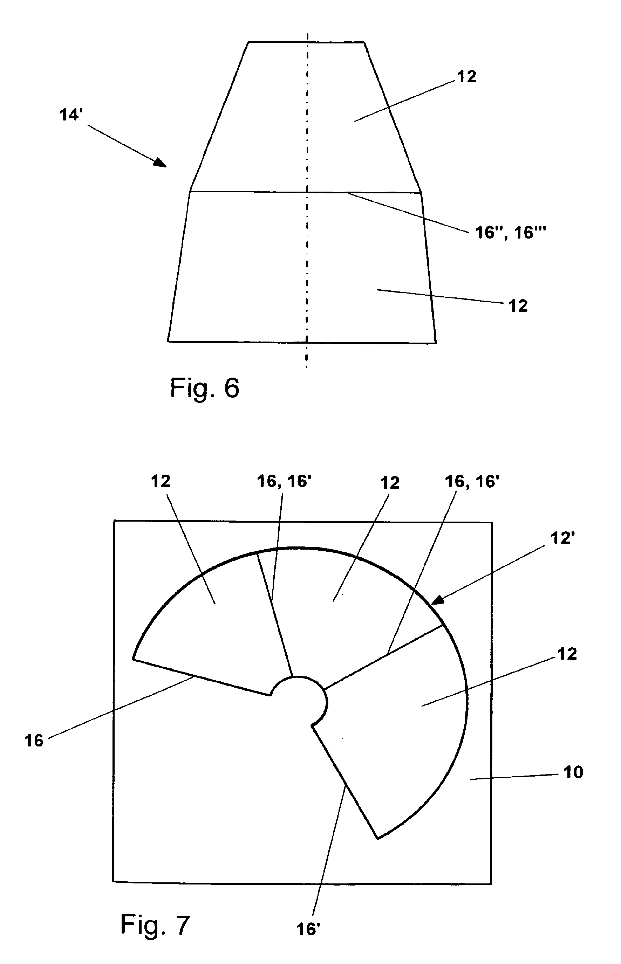

In der Fig. 6 ist eine weitere Ausführungsform eines kegelstumpfförmigen Rohlings 14 schematisch gezeigt, bei welchem das kegelstumpfförmige bzw. kegelige Rohteil 14, das einem Verformen nach dem erfindungsgemäßen Verfahren unterzogen werden kann, geometrische Modifikationen aufweist.

Während der kegelstumpfförmige Rohling 14 nach den Fig. 1 bis 5 jeweils aus einem einzigen ebenflächigen Rohling 10 bzw. ebenflächigen, als teilweiser Kreisring ausgebildeten Rohling 12 gebildet ist, ist der kegelförmige Rohling 14' nach der Fig. 6 aus zwei ebenflächigen Rohlingen 10 bzw. zwei ebenflächigen, als teilweiser Kreisring ausgebildeten Rohlingen 12 zusammengesetzt. Eine solche Ausgestaltung kann vorteilhaft sein, wenn der einfache kegelstumpfförmige Rohling 14 noch keine ausreichende Annäherung an die gewünschte Endform darstellt. Der kegelstumpfförmige Rohling 14' kann dann auch aus zwei oder mehreren, mit unterschiedlichen Kegelwinkeln dargestellten Kegeln über einander zugewandte Mantellinien 16'', 16''' verbunden bzw. verschweißt sein.

Der kegelstumpfförmige Rohling 14' kann dabei in beliebiger Weise gefügt werden: So können zunächst jeweils die zwei ebenflächigen, als teilweiser Kreisring ausgebildeten Rohlinge 12 durch Verschweißen der jeweiligen einander zugewandten Mantellinien 16, 16' zu jeweils einem entsprechenden kegelstumpfförmigen Rohteil 14 gefügt werden. Die beiden kegelstumpfförmigen Rohteile 14 ihrerseits werden anschließend durch Verschweißen der jeweils einander zugewandten Mantellinien 16'', 16''' zu einem einteiligen kegelstumpfförmigen Rohteil 14', welcher letztlich dem erfindungsgemäßen Verformen unterzogen wird, gefügt. In alternativer Ausgestaltung dazu können zunächst jeweils die zwei ebenflächigen, als teilweiser Kreisring ausgebildeten Rohlinge 12 durch Verschweißen der jeweiligen einander zugewandten Mantellinien 16'', 16''' zu einem ebenflächigen, entsprechend geformten Rohteil gefügt werden. Das ebenflächige, entsprechend geformte Rohteil seinerseits wird anschließend durch Verschweißen der jeweils einander zugewandten Mantellinien 16, 16' zu einem einstückigen kegelstumpfförmigen Rohteil 14' gefügt. Kombinationen hieraus sind zur Fügung des kegelstumpfförmigen Rohteils 14' ebenso denkbar.

Schließlich ist in der Fig. 7 ein noch andere Ausführungsform des erfindungsgemäßen Verfahrens dargestellt. Demnach ist es ebenso möglich, einen ebenflächigen, als teilweiser Kreisring ausgebildeten Rohling 12' zunächst aus zwei oder mehreren ebenflächigen, als teilweiser Kreisring ausgebildeten Rohlingen 12 zu einem einstückigen ebenflächigen, als teilweiser Kreisring ausgebildeten Rohling 12' größerer Abmessung zu bilden. In Fig. 7 ist der einstückige ebenflächige, als teilweiser Kreisring ausgebildete Rohling 12' aus insgesamt 3 Rohlingen 12 unterschiedlicher (Winkel-)Größe gebildet. Dabei werden die zwei oder mehreren Rohlinge 12 jeweils über einander zugewandte Mantellinien 16, 16' eines jeweils benachbarten Rohlings 12 miteinander verschweißt. Das Fügen des kegelstumpfförmigen Rohlings 14 erfolgt schließlich durch Schweißen entlang der zwei letzten einander zugewandten Mantellinien 16, 16' des einstückigen ebenflächigen, als teilweiser Kreisring ausgebildeten Rohlings 12' (nicht gezeigt). Die Zahl der ebenflächigen, als teilweiser Kreisring ausgebildeten Rohlinge 12 ergibt sich aus dem Format und den Abessungen von verfügbaren ebenflächigen Rohlingen 12 als Funktion existierender Walzwerkbreiten. Gerade bei Schalenkörpern 30 großer Abmessungen für große Trägerraketen sind das Format und die Abessungen von verfügbaren ebenflächigen Rohlingen 12 nicht ausreichend für einen einstückig zu fertigenden bzw. zu fügenden kegelstumpfförmigen Rohling 14, 14'.

Die Erfindung ist nicht auf die dargestellten Ausführungsformen beschränkt. So das erfindungsgemäße Verfahren auch für beliebig andere abwickelbare, einfach gekrümmte Formen, wie einen Kegel, einen schrägen Kegelstumpf, einen Kegelstumpf oder Kegel mit umgekehrtem Kegelwinkel, einen Zylinder, einen Halbzylinder oder dergleichen einsetzbar, um den Umformgrad und Aufwand in Anbetracht der gewünschten Endgeometrie durch Annäherung an diese mittels einfacher Rundoperationen zu minimieren.

## Patentansprüche

1. Verfahren zum Umformen von wenigstens einem im Wesentlichen ebenflächigen Rohling (10) zu einem Schalenkörper (30), umfassend folgende Schritte:
a) Herausarbeiten von wenigstens einem ebenflächigen, als teilweiser Kreisring ausgebildeten Rohling (12, 12') aus dem wenigstens einen ebenflächigen Rohling (10),
b) Fügen eines kegelstumpfförmigen Rohlings (14, 14') aus dem wenigstens einen ebenflächigen, als teilweiser Kreisring ausgebildeten Rohling (12, 12') durch Schweißen entlang von einander zugewandten Mantellinien (16, 16', 16'', 16''') des wenigstens einen ebenflächigen, als teilweiser Kreisring ausgebildeten Rohlings (12, 12'),
c) Einspannen des kegelstumpfförmigen Rohlings (14, 14') an oder in einer Tragstruktur (26), in welcher der kegelstumpfförmige Rohling (14, 14') mit zunehmender Verformung zu dem Schalenkörper (30) berührungslos aufgenommen wird, und
d) Verformen des kegelstumpfförmigen Rohlings (14, 14') durch konkaves Drücken bzw. Spinformen und/oder Gegenrollen über wenigstens ein die Innenseite (18) des kegelstumpfförmigen Rohlings (14, 14') beaufschlagendes Umformwerkzeug (32) zu dem Schalenkörper (30).

2. Verfahren nach Anspruch 1, **dadurch gekennzeichnet, dass** der wenigstens eine ebenflächige, als teilweiser Kreisring ausgebildete Rohling (12, 12') aus dem wenigstens einen ebenflächigen Rohling (10) durch Trennen, insbesondere durch mechanisches Schneiden, Schneiden mittels Laser oder Wasserstrahl, Sägen, Fräsen oder Erodieren, herausgearbeitet wird.

3. Verfahren nach Anspruch 1 oder 2, **dadurch gekennzeichnet, dass** der kegelstumpfförmige Rohling (14, 14') aus dem wenigstens einen ebenflächigen, als teilweiser Kreisring ausgebildeten Rohling (12, 12') durch Rührreibschweißen (Friction-Stir-Welding bzw. FSW) entlang von einander zugewandten Mantellinien (16, 16', 16'', 16''') des wenigstens einen ebenflächigen, als teilweiser Kreisring ausgebildeten Rohlings (12, 12') gefügt wird.

4. Verfahren nach einem der Ansprüche 1 bis 3, **dadurch gekennzeichnet, dass** der kegelstumpfförmige Rohling (14, 14') an oder in die Tragstruktur (26), in welcher der kegelstumpfförmige Rohling (14, 14') mit zunehmender Verformung zu dem Schalenkörper (30) berührungslos aufgenommen wird, über einen Umfang im Bereich einer großen Öffnung (24) des kegelstumpfförmigen Rohlings (14, 14') durch eine Einrichtung zum Einspannen des kegelstumpfförmigen Rohlings (14, 14') mit einem Drückring und einem Spannring, sowie insbesondere einem Dichtring zwischen Drückring und Spannring, eingespannt und fixiert wird.

5. Verfahren nach einem der Ansprüche 1 bis 4, **dadurch gekennzeichnet, dass** der kegelstumpfförmige Rohling (14, 14') und das wenigstens eine Umformwerkzeug (32) bei der Verformung zu dem Schalenkörper (30) relativ zueinander bewegt, insbesondere gedreht, werden.

6. Verfahren nach einem der Ansprüche 1 bis 5, **dadurch gekennzeichnet, dass** der kegelstumpfförmige Rohling (14, 14') vor dem Verformen mit mindestens einer an Form und Abmessung des kegelstumpfförmigen Rohlings (14, 14') angepassten, beulstabilen Beilage (36, 38) oder dergleichen Unterlage und/oder Auflage gestützt wird.

7. Verfahren nach einem der Ansprüche 1 bis 6, **dadurch gekennzeichnet, dass** der kegelstumpfförmige Rohling (12, 12') über wenigstens eine der Tragstruktur (26) zugeordnete Einrichtung zur Erwärmung und/oder Aufheizung des kegelstumpfförmigen Rohlings (14, 14') auf ein erhöhtes Temperaturprofil gebracht wird.

8. Verfahren nach einem der Ansprüche 1 bis 7, **dadurch gekennzeichnet, dass** der kegelstumpfförmige Rohling (14, 14') vor dem Verformen zu dem Schalenkörper (30) weichgeglüht wird.

9. Verfahren nach einem der Ansprüche 1 bis 8, **dadurch gekennzeichnet, dass** der kegelstumpfförmige Rohling (14, 14') einem Lösungsglühen und anschließendem Abschrecken, sowie bei Bedarf gegebenenfalls einem nachfolgenden Kaltrecken, unterzogen wird.

10. Verfahren nach einem der Ansprüche 1 bis 9, **dadurch gekennzeichnet, dass** der Schalenkörper (30) in der Tragstruktur oder im Ofen warmausgelagert und auf einen Zustand T8 gebracht wird.

11. Verfahren nach einem der Ansprüche 1 bis 10, **dadurch gekennzeichnet, dass** der ebenflächige Rohling (10) oder der kegelstumpfförmige Rohling (14, 14') aus Metall, insbesondere Stahl, Edelstahl, Aluminium, Titan, einer Legierung daraus und/oder einer Kombination daraus, bevorzugt hoch- und höchstfesten Aluminium-Legierungen und Lithium-haltigen Aluminium-Legierungen, und ganz bevorzugt einer gegebenenfalls aushärtbaren, Aluminiumlegierung, AL 2195 oder AL 2219, und/oder aus Kunststoff und/oder aus Keramik und/ oder aus einer Kombination daraus gebildet wird.

12. Verwendung des Verfahrens nach einem der vorhergehenden Ansprüche zum Herstellen von rotationssymmetrischen und/oder nicht rotationssymmetrischen schalenförmigen, insbesondere halbkugelförmig, kugelkappenförmig, kalottenförmig, ellipsoidkallotenförmig, konisch, elliptisch, in
Cassini-Form, Halb-Torus-förmig oder mit dergleichen anderen Querschnittsformen ausgestalteten Bauteilen.

13. Verwendung des Verfahrens nach einem der vorhergehenden Ansprüche zum Herstellen von Schalen als Dome für Raketen-Treibstofftanks, Satellitentanks, Paraboloid-Antennen, Paraboloid-Reflektorschalen, Paraboloid-Solar-Kollektoren, Scheinwerfergehäusen, Behälterböden, Turmkuppeln, Druckkalotten oder dergleichen.

## Claims

1. Method for shaping at least one essentially planar blank (10) into a shell body (30) comprising the following steps:
a) working at least one planar blank (12, 12') from the at least one planar blank (10), as a partial circular ring formed blank (12, 12'),
b) joining a conical blank (14, 14') from the at least one planar blank (12, 12') formed as a partial circular ring by welding along surface lines (16, 16' , 16'', 16''') facing each other of the at least one planar blank (12, 12') formed as a partial circular ring,
c) clamping the conical blank (14, 14') to or in a supporting structure (26), in which the conical blank (14, 14') with increasing shaping to the shell body (30) is accommodated contact-free, and
d) deforming of the conical blank (14, 14') into the shell body (30) by way of concave pressing or spin-forming, respectively and/or counter-rolling with at least one shaping tool (32) acting upon the inner side (18) of the conical blank (14, 14').

2. Method according to claim 1, **characterized in that** the at least one planar blank (12, 12') formed as a partial circular ring is cut from the at least one planar blank (10) by separating, in particular by mechanical cutting, by cutting with laser or water jet, by sawing, by milling or by eroding.

3. Method according to claim 1 or 2, **characterized in that** the conical blank (14, 14') is joined from the at least one planar blank (12, 12') formed as a partial circular ring by friction, stir welding (FSW) along surface lines (15, 16', 16'', 16''') facing each other of the at least one planar blank (12, 12') formed as a partial circular ring.

4. Method according to one of claims 1 to 3, **characterized in that** the cynical blank (14, 14') is clamped and fixed in place at or in the supporting structure (26), in which the conical blank (14, 14') with increasing shaping into the shell body (30) is accommodated contact-free, via a circumference in the area of a large aperture (24) of the conical blank (14, 14') by means of a device to clamp the conical blank (14, 14') with a pressure ring and a clamping ring as well has in particular with a sealing ring between pressure ring and clamping ring.

5. Method according to one of claims 1 to 4, **characterized in that** the conical blank (14, 14') and the at least one shaping tool (32) in the deforming process to shell body (30) are moved relative to each other, particularly in rotation.

6. Method according to one cf claims 1 to 5, **characterized in that** the conical blank (14, 14') prior to shaping is supported by at least one buckling-stable insert (36, 38) adapted in form and dimension to the conical blank (14, 14') or similar support and/or cover sheet.

7. Method according to one of claims 1 to 6, **characterized in that** the conical blank (12, 12') is brought to a higher temperature profile via at least one device for heating the conical blank (14, 14') allocated to the support structure (26).

8. Method according to one of claims 1 to 7, **characterized in that** the conical blank (14, 14') prior to deforming into the shell body (30) is soft-annealed.

9. Method according to one of claims 1 to 8, **characterized in that** the conical blank (14, 14') is subjected to solution annealing followed by quenching as well as, where required, followed by cold drawing.

10. Method according to one of claims 1 to 9, **characterized in that** the shell body (30) is hot-aged in the supporting structure or in the oven and is brought to a status T8.

11. Method according to one of claims 1 to 10, **characterized in that** the planar blank (10) or the conical blank (14, 14') is made of metal, in particular steel, stainless steel, aluminum, titanium, an alloy thereof and/or a combination thereof, preferably high and super high strength aluminum alloys and aluminum alloys containing lithium, and most preferably a precipitation hardening aluminum alloy, AL 2195 or AL 2219, and/or thermosetting plastic and/or ceramics and/or a combination thereof.

12. Use of the method according to one of the afore claims to manufacture rotation symmetric and/or non-rotation symmetric shell-shaped, in particular hemispherical, spherical-shaped, dome-shaped, ellipsoid-spherical shaped, cone-shaped or ellipsoid components or components in Cassini-form or semi-torus form or other components with similar cross-sectional shapes.

13. Use of the method according to one of the afore claims to manufacture shells as domes for rocket fuel tanks, satellite tanks, parabolic antennas, parabolic reflector shells, parabolic solar collectors, headlamp housings, container floors, tower cupolas, pressure domes or similar.

## Revendications

1. Procédé pour mettre en forme au moins une ébauche (10) sensiblement plane pour donner un corps en cuvette (30), comprenant les étapes suivantes :
a) on prépare, à partir de ladite au moins une ébauche plane (10) au moins une ébauche (12, 12') plane réalisée comme un anneau circulaire partiel,
b) on assemble une ébauche en forme de tronc de cône (14, 14') à partir de ladite au moins une ébauche plane (12, 12') réalisée comme un anneau circulaire partiel, par soudure le long de lignes enveloppe (16, 16', 15", 16'"), tournées l'une vers l'autre, de ladite au moins une ébauche plane (12, 12') réalisée comme un anneau circulaire partiel,
c) on serre l'ébauche en forme de tronc de cône (14, 14') sur ou dans une structure porteuse (26) dans laquelle l'ébauche en forme de tronc de cône (14, 14') est reçue sans contact avec une déformation progressive vers le corps en cuvette (30), et
d) on déforme l'ébauche en forme de tronc de cône (14, 14') en appliquant une pression concave ou une mise en forme par rotation et/ou au moyen de galets antagonistes au moyen d'un outil de mise en forme (32) qui attaque le côté intérieur (18) de l'ébauche en forme de tronc de cône (14, 14') pour donner le corps en cuvette (30).

2. Procédé selon la revendication 1, **caractérisé en ce que** ladite au moins une ébauche plane (12, 12') réalisée comme un anneau circulaire partiel à partir de ladite au moins une ébauche plane (10) est préparée par séparation, en particulier par coupe mécanique, par coupe au moyen d'un faisceau laser ou d'un jet d'eau, par sciage, par fraisage ou par érosion.

3. Procédé selon la revendication 1 ou 2, **caractérisé en ce que** l'ébauche (14, 14') en forme de tronc de cône est assemblée à partir de ladite au moins une ébauche plane (12, 12') réalisée comme un anneau circulaire partiel par soudage par friction-agitation (Friction-Stir-Welding) le long de lignes enveloppe (16, 16', 16", 16'") tournées l'une vers l'autre de ladite ébauche (12, 12') plane réalisée comme un anneau circulaire partiel.

4. Procédé selon l'une des revendications 1 à 3, **caractérisé en ce que** l'ébauche en forme de tronc de cône (14, 14') est enserrée et fixée sur ou dans la structure porteuse (26), dans laquelle l'ébauche en forme de tronc de cône (14, 14') est reçue sans contact avec une déformation croissante pour donner le corps en cuvette, sur une périphérie dans la région d'une ouverture de grande taille (24) de l'ébauche en forme de tronc de cône (14, 14') par un moyen pour enserrer l'ébauche en forme de tronc de cône (14, 14') avec une bague de pressage et une bague de serrage, ainsi qu'en particulier une bague d'étanchéité entre la bague de pressage et la bague de serrage.

5. Procédé selon l'une des revendications 1 à 4, **caractérisé en ce que** l'ébauche en forme de tronc de cône (14, 14') et ledit au moins un outil de mise en forme (32) sont déplacés l'un par rapport à l'autre, en particulier tournés lors de la déformation pour donner le corps en cuvette (30).

6. Procédé selon l'une des revendications 1 à 5, **caractérisé en ce que** l'ébauche en forme de tronc de cône (14, 14') est soutenue, avant la déformation, avec au moins un appui (36, 38) ou un support similaire, stable à l'encontre des déformations, adapté à la forme et aux dimensions de l'ébauche en forme de tronc de cône (14, 14').

7. Procédé selon l'une des revendications 1 à 6, **caractérisé en ce que** l'ébauche en forme de tronc de cône (12, 12') est amenée à un profil de température élevée au moyen d'au moins un système, associé à la structure porteuse (26). pour réchauffer l'ébauche en forme de tronc de cône (14, 14'),

8. Procédé selon l'une des revendications 1 à 7, **caractérisé en ce que** l'ébauche en forme de tronc de cône (14, 14') est soumise à un recuit doux avant la déformation pour donner le corps en cuvette (30).

9. Procédé selon l'une des revendications 1 à 8, **caractérisé en ce que** l'ébauche en forme de tronc de cône (14, 14') est soumise à un recuit de mise en solution et à une trempe successive, ainsi que le cas échéant à un étirage successif à froid, en cas de besoin.

10. Procédé selon l'une des revendications 1 à 9, **caractérisé en ce que** le corps en cuvette (30) est stocké à chaud dans la structure porteuse ou dans le four, et est amené à un état T8.

11. Procédé selon l'une des revendications 1 à 10, **caractérisé en ce que** l'ébauche plane (10) ou l'ébauche en forme de tronc de cône (14, 14') est formée en métal, en particulier acier, acier spécial, aluminium, titane, un alliage et/ou une combinaison de ceux-ci, de manière préférée des alliages d'aluminium de haute et très haute solidité et des alliages d'aluminium contenant du lithium, et de manière tout à fait préférée un alliage d'aluminium le cas échéant durcissable, AL 2195 ou AL 2219, et/ou en matière plastique et/ou en céramique et/ou une combinaison de ceux-ci.

12. Utilisation du procédé selon l'une des revendications précédentes pour la production de composants à symétrie de révolution et/ou en forme de cuvette sans symétrie de révolution, en particulier en forme hémisphérique, en forme de calotte sphérique, en forme de calotte, de calotte ellipsoïdale, de forme conique, elliptique, en forme de Cassini, en forme de demi-tore, ou avec d'autres formes similaires en section transversale.

13. Utilisation du procédé selon l'une des revendications précédentes pour la production de coques à titre de coupoles pour des réservoirs de carburant propulseur pour fusées, réservoirs de satellites, antennes paraboliques, coques de réflecteurs paraboliques, collecteurs solaires paraboliques, boîtiers de phares, fonds de récipients, coupoles de tours, calottes sous pression ou similaires.
